# EUROPÄISCHE PATENTSCHRIFT

(11) **EP 1 205 002 B1**
(45) Veröffentlichungstag und Bekanntmachung des Hinweises auf die Patenterteilung: **08.10.2003**
(21) Anmeldenummer: 00952872.0
(22) Anmeldetag: 26.06.2000
(51) Int. Cl.: H01M 8/24

(54) **VORRICHTUNG ZUM VERBINDEN VON MINDESTENS ZWEI BRENNSTOFFZELLEN-BATTERIEN UND ENTSPRECHEND VERBUNDENE ANLAGE**
DEVICE FOR CONNECTING AT LEAST TWO FUEL CELL BATTERIES AND A UNIT CONNECTED ACCORDINGLY
DISPOSITIF DESTINE A RELIER AU MOINS DEUX BATTERIES DE PILES A COMBUSTIBLE ET ENSEMBLE AINSI RELIE

(30) Priorität: 29.07.1999 DE 19935764
(43) Veröffentlichungstag der Anmeldung: 15.05.2002
(73) Patentinhaber: SIEMENS AKTIENGESELLSCHAFT, 80333 München (DE)
(72) Erfinder: MATTEJAT, Arno, D-91088 Bubenreuth (DE); STRASSER, Karl, D-91058 Erlangen (DE)
(86) Internationale Anmeldenummer: DE0002069
(87) Internationale Veröffentlichungsnummer: WO01009971

(56) Entgegenhaltungen:
- EP-A- 0 981 175
- WO-A-96/07211
- US-A- 5 543 240

## Beschreibung

Die Erfindung betrifft eine Vorrichtung zum Verbinden von mindestens zwei Brennstoff-Batterien sowie eine Anlage, bei der mehrere solcher Batterien miteinander verbunden sind.

Elektrische Energie kann mit besonders hohem Wirkungsgrad dadurch erzeugt werden, daß in ein Volumen Wasserstoff (oder ein wasserstoffhaltiges Medium, z.B. Kohlenwasserstoff), und in ein anderes Volumen Sauerstoff (oder ein Sauerstoff-enthaltendes Medium, z.B. Luft) eingeleitet wird, und diese beiden Betriebsmittel an einer die beiden Volumina trennenden Membran, in der Diffusionsvorgänge stattfinden, auf kaltem Wege derart verbrannt werden, daß an der Membran ein elektrisches Potential entsteht. Dieses Potential wird über metallische Teile abgegriffen. Eine entsprechende Brennstoffzellen-Einheit benötigt also eine Zufuhr der beiden Betriebsmedien, die beiden Volumina mit der dazwischen geschalteten Membran, eine Abführung der Medien aus den beiden Volumina und eine gasdichte Umhüllung der Volumina, Zuführungen und Abführungen, sowie elektrische Anschlüsse für das abgegriffene elektrische Potential. Dabei kann eine derartige Brennstoffzellen-Einheit nur ein niedriges Potential und einen begrenzten Strom liefern und deshalb werden mehrere derartige Einheiten zur Erzeugung höherer Spannung elektrisch in Serie und zur Erzeugung höherer Ströme elektrisch parallel geschaltet. Dadurch entsteht ein Modul (z.B. bei einer ebenen, d.h. plattenförmigen Ausbildung der Einheiten ein Block), der als elektrische Batterie verwendet werden kann und jeweils selbst Anschlüsse für die Prozeßmedien (also die zugeführten bzw. abgeführten, im allgemeinen gasförmigen Stoffe jeder Einheit) besitzt. Üblicherweise sind noch Wärmetauscher vorgesehen, die die zugeführten Prozeßmedien mittels der Wärme der abgeführten Prozeßmedien erwärmen, wobei eine derartige Batterie noch besonders wärmeisoliert ist.

Die Spannungsversorgung der meisten Verbraucher benötigt eine Leistung, die am Besten durch einen modularen Aufbau der Spannungsversorgungsanlage erreicht werden kann, also durch Parallel- und/oder Reihenschaltung mehrerer Batterien, so daß bei einem Defekt in einzelnen Brennstoffzellen nur jeweils eine defekte Batterie ausgewechselt und/oder repariert werden muß.

Eine Anlage aus derartigen Batterien enthält also eine Vielzahl von Rohren oder Schläuchen mit Ventilen (eventuell auch Temperatursensoren) für individuelle Eingriffe in die Prozesse einzelner Batterien, Abzweigungen (insbesondere T-Stücke) und Verbindungselemente, die zu den entsprechenden Tanks oder Hauptleitungen der zuzuführenden Prozeßmedien und Abgasleitungen für die abzuführenden Prozeßmedien führen. Es entsteht also ein komplexes Verbindungssystem mit einer verwirrenden Anzahl von Anschlüssen und Leitungsstücken (eventuell mit prozeßtechnischen Einrichtungen), das nicht nur individuell entworfen, sondern auch zu Service- oder Reparaturzwecken gelöst und wieder zusammengestellt werden muß. Hinzu kommt, daß in der räumlichen Anordnung vieler zusammengeschalteter Batterien jeweils nur die vordere und/oder hintere Stirnfläche einer Batterie zugänglich ist, um Anschlüsse anzubringen. Zum Herausnehmen einer einzelnen Batterie aus diesem Verband müssen dann nicht nur die Anschlüsse dieser Batterie gelöst werden, sondern es müssen auch die Anschlüsse und Verbindungsleitungen anderer Batterien gelöst werden, sofern diese anderen Leitungen längs der Stirnseite der herauszunehmenden Batterie verlaufen und das Herausnehmen der Batterie verhindern. Außerdem steht meistens nicht an beiden Stirnseiten der Batterie ausreichend Platz zur Verfügung, um eine Batterie wahlweise nach der einen oder der anderen Seite herauszunehmen.

Aus der WO 96 072 11 A ist eine Vorrichtung zum Zusammenschalten von einer ersten und mindestens einer zweiten Brennstoffzellen-Batterie bekannt, bei der jeder Batterie eine Endplatte zugeordnet ist. Die Endplatten benachbarter Batterien sind über Dichtungen und Verbindungsstücke miteinander verbunden. Die einzelnen Batterien lassen sich somit miteinander auf einfache und raumsparende Weise verbinden.

Der Erfindung liegt die Aufgabe zugrunde, eine solche Anschlußtechnik von Brennstoff-Batterien in Mehrfachanlagen, durch die die einzelnen Batterien untereinander und miteinander auf einfache und raumsparende Weise verbindbar und vernetzbar sind, weiter zu verbessern.

Diese Aufgabe wird durch eine Vorrichtung mit den Merkmalen des Patentanspruchs 1 gelöst und führt zu einer Anlage mit den Merkmalen des Patentanspruchs 16. Vorteilhafte Weiterbildungen der Vorrichtung ergeben sich aus den Unteransprüchen

Aufgrund ihrer Flexibilität lassen die Verbindungsleitungen eine Bewegung der Anschlußblöcke zueinander zu. Damit sind Montageversätze zwischen den Brennstoffzellen-Blöcken und/oder -Modulen ausgleichbar, wobei insbesondere vorteilhaft ist, wenn die Länge der Verbindungsleitung flexibel ist, z.B. durch Zusammendrücken oder Auseinanderziehen von Wellenschläuchen. Außerdem können flexible Verbindungsleitungen bei der Montage leicht eingebaut werden, indem sie vorübergehend zusammengedrückt oder abgebogen werden. Wenn die Verbindungsleitungen während der Montage zusammengedrückt werden und sich im eingebauten Zustand teilweise entspannen, drücken sie bereits mit einer gewissen Dichtwirkung auf die Gegenflansche. Ebenso können die Verbindungsleitungen aufgrund der Flexibilität leichter bei der Demontage ausgebaut werden.

Um die Flexibilität der Verbindungsleitungen zu erreichen, können die Verbindungsleitungen zumindest an bestimmten Bereichen wellen- bzw. rippenartig geformt sein. Diese wellenartigen Bereiche gewährleisten sodann die gewünschte Flexibilität beim Einsetzen der Verbindungsleitungen, bieten aber auch gleichzeitig eine gewisse Stabilität im eingesetzten Zustand.

Die Verbindungsleitungen weisen vorteilhafterweise an mindestens einem Ende eine Flanschplatte auf, die an den einen Anschlußflansch des Anschlußblocks gekoppelt wird. Die jeweilige, typischerweise als Rohr ausgebildete Verbindungsleitung wird dabei vorteilhafterweise an die Flanschplatte angeschweißt, um eine sichere und dichte Verbindung zu erhalten. Die Verbindungsleitungen stellen somit zusammen mit den Flanschplatten eine montagefreundliche Medienkupplung zwischen den einzelnen Anschlußblöcken dar, die zudem wenige Dichtstellen hat.

In einer Ausführungsvariante weisen die Anschlußblöcke mindestens eine Flanschplatte zur Verbindung mit einer Flanschplatte auf, in der die entsprechenden Anschlüsse einer Batterie integriert sind. Der Anschlußblock kann somit auf einfache Weise auf die Flanschplatte der Batterie angekoppelt werden, so daß eine sichere und schnelle Verbindung zwischen Anschlußblock und Batterie und den darin geführten Versorgungsleitungen geschaffen wird. Bei einem erneuten Zusammenschluß von Anschlußblock und Flanschplatte ist somit lediglich noch diese Verbindungsstelle auf Leckagen zu überprüfen.

In einer anderen Ausführungsvariante ist der Anschlußblock in eine Stirnfläche der zugehörigen Batterie integriert. Batterie und Anschlußblock stellen somit eine fest verbundene Einheit dar, womit sich die Anzahl der Dichtungen (und der möglichen Leckstellen) und die Anzahl der zu demontierenden Bauteile reduziert.

Versorgungsleitungen der Batterien (vor allem die Ableitungen der entstandenen Prozeßmedien, denn dort sind Leckstellen weniger kritisch) können aber auch an dem entsprechenden Block über einfach betätigbare Steckverbindungen angeschlossen sein.

Vorteilhafterweise sind zwischen Anschlußblock und der jeweiligen Flanschplatte der Kupplung (Anschlußflansch bzw. Kupplungsflansch) bzw. des Brennstoffzellen-Blocks Dichtungselemente vorgesehen.

Als Dichtungselement sind Flachdichtungen möglich, die gegebenenfalls in Form gestanzt sind. Die Flachdichtungen passen sich mit ihrer ganzen Breite der Dichtfläche an.

Die Dichtungselemente können auch O-Ring-Dichtungen sein, die in Nuten liegen, welche in einen der Flansche bzw. der massiven Flansch-Platten eingearbeitet sind. Die O-Ring-Dichtungen können somit bei der Demontage in einfacher Weise ausgewechselt werden.

Es ist aber auch möglich, zwischen einer Flanschplatte und dem entsprechenden Gegenflansch eine Trägerplatte aus einem Elastomer-Verbundwerkstoff einzusetzen, in der Dichtungen direkt eingearbeitet sind. Demnach bestimmt die Trägerplatte bei O-Ringen z.B. den Verformungsweg. Elastomere und Formteile können außerdem einvulkanisiert oder eingeklebt werden.

Zweckmäßigerweise können die Anschlüsse der Stichleitungen bzw. Sammelleitungen in den Flanschplatten platzsparend angeordnet sein, also derart, daß sie nahe beieinander liegen. Diese Anordnung unterstützt die kompakte Bauweise und erleichtert außerdem die Montage und Demontage von einzelnen Bauteilen.

Die Durchmesser der Stichleitungen, die mit einer Batterie verbunden sind, können so dimensioniert sein, daß sie lediglich die daran angeschlossenen Batterien ausreichend mit den entsprechenden Prozeßmedium versorgen bzw. entsorgen. Insbesondere können Anschluß-Flansche verwendet werden, die den Durchmesser der Stichleitungen derart verengen, daß der Durchsatz auf den Bedarf der daran angeschlossenen Batterie begrenzt wird.

Die Durchmesser der Sammelleitungen in den Anschlußblöcken und der Verbindungsleitungen sind zweckmäßigerweise auf den Bedarf der gesamten Brennstoffzellen-Anlage ausgelegt. Somit kann bei unveränderter Anschlußgröße der Stichleitungen an der Batterie durch Größenvariation (z.B. durch Auswahl aus standardisierten Größen) der Durchmesser im Hauptstrang Einfluß auf Druckverluste, Gleichmäßigkeit bei der Mengenverteilung und Strömungsgeräusche genommen werden.

Die Leitungen zwischen Batterie, T-Stücken und Flanschen können in Form von Schläuchen oder Rohren vorgesehen sein. Der Einsatz von Schläuchen gewährleistet auch eine flexible Verbindung zwischen Batterie und Anschlußblock.

Zusätzlich können in die Versorgungsleitungen Ventile, Meßgeräte (z.B. Temperaturfühler, Abgasmeßeinrichtungen etc.) oder andere verfahrenstechnische Geräte eingebaut werden. Dadurch ist unter anderem eine individuelle Anpassung auf den aktuellen Versorgungsbedarf und die Prozeßführung in einer Batterie möglich.

Ein weiterer Vorteil dieser Vorrichtung ist, daß auch koaxiale Doppelmantelrohre problemlos angeschlossen werden können. So ist es in bestimmten Umgebungen z.B. notwendig, den zum Betrieb erforderlichen Wasserstoff daran zu hindern, aus dem Rohrsystem in die Umgebung zu gelangen. Dies wird üblicherweise durch erreicht, daß Wasserstoff in Doppelmantelrohren geführt wird, bei denen der äußere Raum kontrollierbar ist.

Eine sichere Abdichtung beim Anschluß eines Doppelmantelrohres an einen Flansch kann aus einem Formteil bestehen, das zwei koaxial angeordnete Dichtringe umfaßt, die mit Stegen verbunden sind.

Vor allem zur Lärmreduzierung ist es vorteilhaft, die Verbindungsleitungen zumindest teilweise, insbesondere an Wellen, Übergängen oder Rücksprüngen mit flexiblem Werkstoffmaterial auszukleiden. Auch die Rücksprünge an Dichtstellen zwischen Flansch und Anschlußblock können zur Geräuschverminderung entsprechend ausgekleidet sein. Das flexible Werkstoffmaterial ist dabei in einer solchen Stärke zu wählen, daß die Flexibilität der Verbindungsleitungen nicht beeinträchtigt wird.

Vorteilhafterweise können die Verbindungsleitungen vollständig mit flexiblem Werkstoffmaterial ausgekleidet sein und dabei auch zweckmäßigerweise so geformt sein, daß der Strömungsverlauf möglichst glatt ist.

Als flexibles Werkstoffmaterial kann beispielsweise ein Elastomer gewählt werden, der sich an die Innenwand des Verbindungsleitung glatt anlegt.

Vorteilhafterweise können in Anschlußblöcken, Verbindungsleitungen und/oder den Flanschen selbstsperrende Einrichtungen (z.B. Rückschlagventile) vorgesehen sein, die zum Beispiel bei Demontage einer Dichtstelle sperren und auf diese Art ein Auslaufen von Kühlwasser oder ein Entweichen von Wasserstoff verhindern.

Die Erfindung ist anhand von vorteilhaften Ausführungsbeispielen in den Figuren näher erläutert. Diese zeigen:
- FIG 1: eine Teil-Seitenansicht einer Anlage mit mindestens zwei Brennstoffzellen-Batterien;
- FIG 2: eine Vorderansicht der Anlagenteile aus Figur 1;
- FIG 3: eine Teil-Seitenansicht einer Anlage mit mindestens zwei Brennstoffzellen-Batterien einer alternative Ausführungsvariante;
- FIG 4: eine Vorderansicht einer der Anlagenteile gemäß Figur 3;
- FIG 5: eine Draufsicht auf eine Flanschplatte mit verschiedenen Dichtungselementen;
- FIG 6: eine Seitenansicht auf ein(en) mit einer Flanschplatte über Versorgungsleitungen verbundenen Brennstoffzellen-Block/-Modul;
- FIG 7: eine Vorderansicht auf die Flanschplatte gemäß Figur 6;
- FIG 8: einen Schnitt durch einen Anschlußblock;
- FIG 9: einen Schnitt durch die Verbindungsleitungen und die daran vorgesehenen Flanschplatten, sowie
- FIG 10: einen Schnitt durch ausgekleidete Verbindungsleitungen.

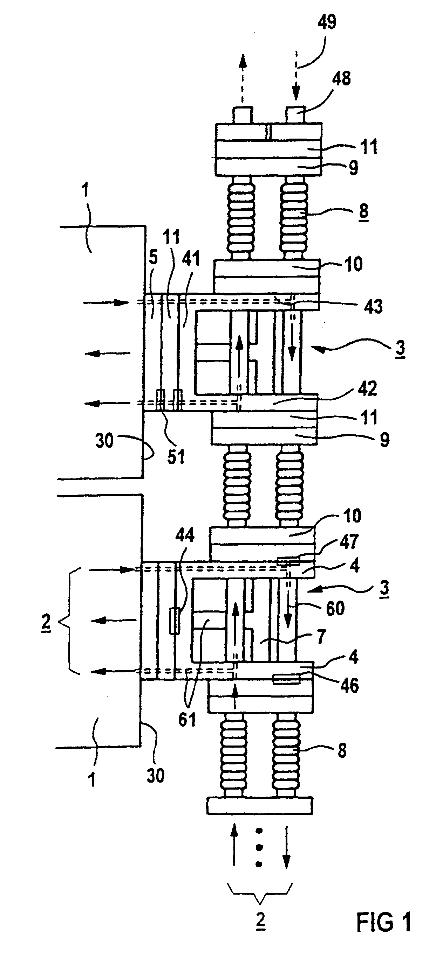

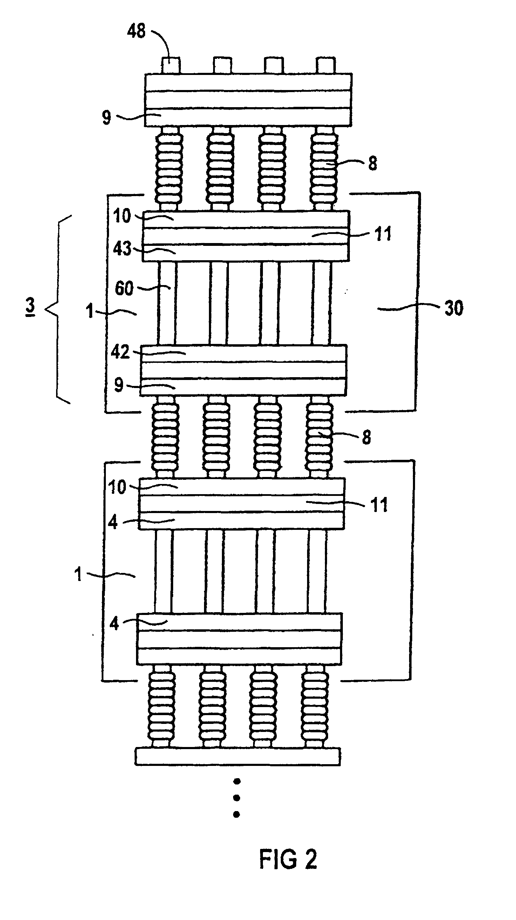

In den Figuren 1 und 2 sind zwei nebeneinander angeordnete Brennstoffzellen-Batterien 1 einer Anlage gezeigt, wobei sich an diese Batterien 1 nach oben und unten weitere Batterien anschließen können, also eine Zeile aus hintereinander angeordneten Batterien vorliegt. Ferner können durch die Batterien 1 der Figur 1 weitere Batterien einer oder mehrerer weiterer Zeilen verdeckt sein, wobei dann in Figur 2 eine neben den Batterien 1 liegende Zeile aus Batterien erkennbar wäre, aber nicht dargestellt ist.

Diese Batterien benötigen Anschlüsse für die Zufuhr des sauerstoffhaltigen Prozeßmediums und des wasserstoffhaltigen Prozeßmediums, für die Abführung der in den Batterien entstehenden Prozeßmedien (Abgase), sowie zur Zuführung und Abführung von Kühlwasser. Diese Anschlüsse liegen jeweils auf einer in die gleiche Richtung weisenden Stirnfläche 30 der Batterien 1. Dabei ist durch die Pfeile 2 ein System von Versorgungsleitungen angedeutet, die einerseits durch die Seitenflächen 30 der Batterien und deren Isolation hindurch zu den Brennstoffzellen-Einheiten in den Batterien führt, andererseits zu entsprechenden Versorgungseinrichtungen, z.B. einem Kompressor für Luft, einem Vorratstank für wasserstoffhaltiges Brenngas, je einer Entsorgungsanlage für die in den beiden Volumina der Brennstoffzellen entstehenden Abgase (z.B. zur katalytischen Restverbrennung von Wasserstoff und Brenngas und/oder zur Abscheidung von dabei entstehendem Prozeßwasser), zu einer Kühlwasser-Druckpumpe und zu einem Sammeltank für das Kühlwasser. Dabei ist in den Figuren nicht dargestellt, daß diesen Versorgungseinrichtungen jeweils Leitungsverzweigungen vorgeschaltet sein können, um für jede Zeile insgesamt sechs Leitungssysteme mit jeweils einem Hauptstrang zu bilden.

Aus den Figuren 1 und 2 ist jedoch ersichtlich, daß diese von den Versorgungseinrichtungen kommenden Hauptstränge von Anschlußblöcken 3 und dazwischenliegenden Verbindungsleitungen 8 gebildet werden, die gleichzeitig auch den Anschluß für die Batterien bilden.

Dabei tragen die Anschlußblöcke 3 jeweils drei Flanschplatten 4, nämlich eine seitliche Anschlußplatte 41 zum Anschluß an eine entsprechende Flanschplatte 5 ("Gegenflansch") der jeweils dem Anschlußblock 3 zugeordneten Batterie 1, und je eine erste Kupplungsflanschplatte 42 und eine zweite Kupplungsflanschplatte 43, wobei die erste Kupplungsflanschplatte 42 jeweils über ein Dichtungselement 11 mit der zweiten Kupplungsflanschplatte 43 eines benachbarten Anschlußblocks verkuppelt ist.

Lediglich für den Anschlußblock, der der ersten Batterie einer Zeile zugeordnet ist und somit am Ende eines Hauptstrangs liegt, sind keine Anschlußflansche zum Ankuppeln an einen weiteren Anschlußblock erforderlich, vielmehr kann dieser Block an der dem ersten Anschlußflansch gegenüberliegenden Seite auch nur jeweils einen Abschluß des jeweiligen Versorgungshauptstrangs tragen. In Figur 1 ist aber dargestellt, daß alle Anschlußblöcke gleich aufgebaut sind, wobei dann der erste Anschlußblock ebenfalls an eine Verbindungsleitung 8 angeschlossen, jedoch jeder Versorgungshauptstrang durch eine Abschlußkappe 48 abgeschlossen ist. Diese Abschlußkappen 48 können aber auch ohne Zwischenschaltung einer Verbindungsleitung 8 direkt an die zweite Kupplungsflanschplatte 43 eines Anschlußblocks aufgesetzt werden, falls nicht, wie durch die Pfeile 49 angedeutet ist, dieser Block an einen Block einer weiteren Batterie angeschlossen werden soll.

Jeder Anschlußblock 3 enthält zur Bildung eines Versorgungshauptstranges eines Sammelleitung 60 mit einer Stichleitung 61, dessen eines Ende in die Sammelleitung 60 führt und deren freies, anderes Ende an einen Anschluß einer Batterie angekuppelt ist. Entsprechend trägt das freie Ende jeder Stichleitung 61 einen Anschlußflansch 47, wobei in den Figuren die vorteilhafte Ausführungsform dargestellt ist, bei der alle Anschlußflansche 47 zu einer gemeinsamen Flanschplatte, nämlich der bereits erwähnten Anschlußflanschplatte 41, vereinigt sind.

Entsprechend mündet auch ein Ende jeder Sammelleitung 60 in einen Kupplungsflansch 47, wobei ebenfalls in der dargestellten, bevorzugten Ausführungsform diese Kupplungsflansche 47 an einer Seite jedes Blocks 3 zu einer Flanschplatte, nämlich der erwähnten ersten Kupplungsflanschplatte 42, integriert sind. Analog bilden auch die zweiten Kupplungsflanschplatten 43 jeweils die integrierten Bauteile zur Bildung jeweils eines Kupplungsflansches am anderen Ende jeder Sammelleitung, sofern der Anschlußblock überhaupt einen zweiten Kupplungsflansch zum Anflanschen an einen ersten Kupplungsflansch einer anderen Batterie benötigt.

Kernstück jedes Blocks sind also jeweils T-Stücke 7, die jeweils gleichzeitig eine Sammelleitung und eine Stichleitung bilden. Sie münden in entsprechende Kupplungsflansche und Anschlußflansche und/oder in Flanschplatten mit Durchgängen für die Sammelleitungen, wobei in diese Flanschplatten auch gleichzeitig Stichleitungen integriert sein können, die von den Durchführungen der Sammelleitungen ausgehen und zu den Anschlüssen und Anschlußflanschen der Batterie führen.

Die erwähnten Verbindungsleitungen 8 tragen ihrerseits jeweils eine Sammelleitung und jeweils Kupplungsflansche ("Gegenflansche") zum Ankuppeln an die Anschlußblöcke. Vorteilhaft sind auch die Kupplungsflansche der Verbindungsleitungen 8 zu entsprechenden Kupplungsflanschplatten 9, 10 integriert.

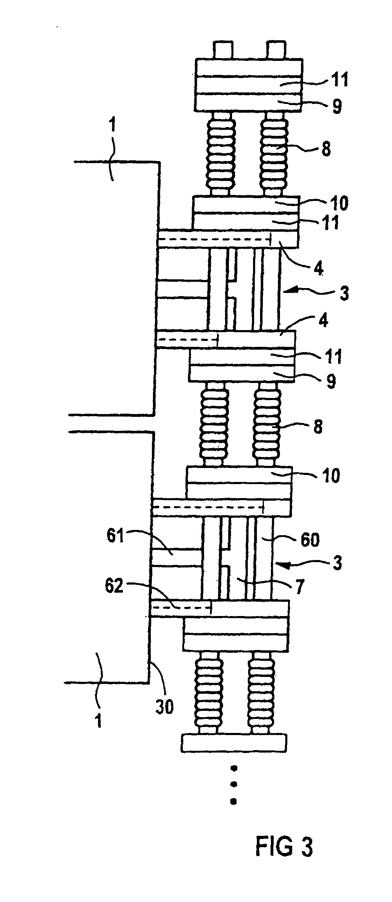

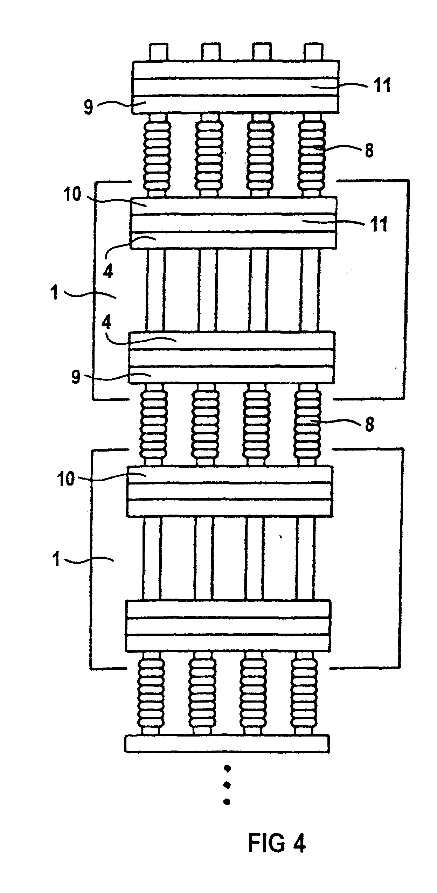

Beim Ausführungsbeispiel der Figuren 3 und 4 tragen gleiche Bauteile jeweils die selben Bezugszeichen. Jedoch ist hier der Anschlußblock jeweils bereits in die entsprechende Stirnfläche 30 der Batterien 1 integriert. Die Anschlußflanschplatten 5 der Figur 1 können z.B. die Stirnflächen eines Batteriegehäuses sein, wobei die T-Stücke 7 (genauer: Die Stichleitungen 61, die in die Sammelleitungen 60 übergehen) bereits an diese Stirnplatten bzw. Deckplatten gasdicht angeschweißt sind. Ebenso können die Kupplungsflanschplatten 4, die in ihrem Inneren ebenfalls Stichleitungen tragen können (angedeutet durch die durchbrochene Linie 62) bereits in die jeweilige Batterie integriert sein, z.B. an eine entsprechende Stirnplatte des Batteriegehäuses angeschweißt sein.

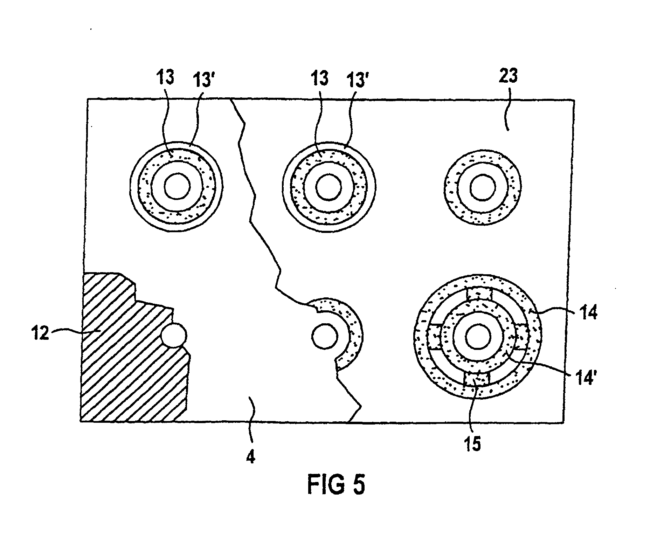

Figur 5 zeigt verschiedene Ausführungsformen der Dichtungselemente 11. Dabei kann das Dichtungselement 11 als Flachdichtung 12 ausgeführt sein und zum Abdichten aller in einer Flanschplatte 4 integrierten Anschlußflansche oder Kupplungsflansche dienen. Es können aber auch O-Ring-Dichtungen 13, die in Nuten 14 der Flansche bzw. Flanschplatten eingelegt sind, verwendet werden. Es ist aber auch möglich, daß zwischen die jeweilige Gegen-Flanschplatte 5, 9, 10 eine Trägerplatte 23 aus einem Elastomer-Verbundwerkstoff eingesetzt wird, in der Dichtungen bereits direkt eingearbeitet sind. Diese Dichtungen können an den Elastomeren-Verbundwerkstoffen auch einvulkanisiert oder eingeklebt werden, so daß auch bei einer Demontage der Bauteile die Dichtung nicht herausfällt.

Die Anschlüsse, mit denen die Stichleitungen 61 in den Anschlußflanschplatten 41 an eine Batterie angeschlossen sind, sind in den Anschlußflanschplatten 41 und den Gegen-Flanschplatten 5, 10, 11 platzsparend angeordnet. Dies führt zu einer besonders kompakten Bauweise der Vorrichtung.

Die Durchmesser der Stichleitungen 61, 62 sind in den mit einer Batterie verbundenen Anschlußflanschen und Flanschplatten 41 und 5 auf den Bedarf der daran angeschlossenen Batterie dimensioniert. Dies verhindert eine Überdimensionierung der Versorgungsleitungen 2 für eine einzelne Batterie und erleichtert die Verteilung auf die einzelnen Batterien.

Die Durchmesser der Sammelleitungen 60 in den Anschlußblöcken 3, den Verbindungsleitungen 8 sowie den Flanschplatten 42, 43, 9, 10 sind auf den Bedarf der ganzen Anlage dimensioniert. Bei unveränderter Anschlußgröße an den Batterien kann demnach durch Größenvariation in den Sammelleitungen auf Druckverluste, Gleichmäßigkeit bei der Mengenverteilung und Strömungsgeräusche Einfluß genommen werden.

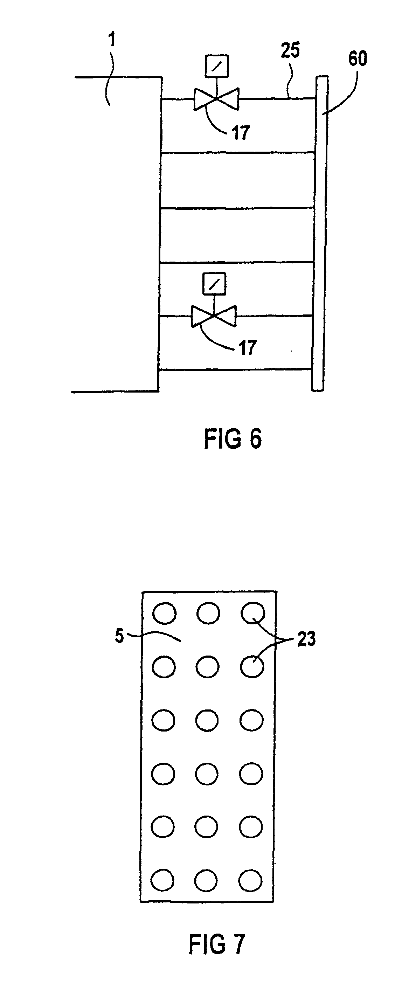

Wie aus Figur 6 hervorgeht, können zwischen einer Batterie 1 und den Sammelleitungen 60 Schläuche oder Rohre 25 vorgesehen sein. Dabei kann es sich um Teile der Stichleitungen 61, 62 handeln, oder um eigene Verbindungsleitungen, die als Verlängerung der Stichleitungen an den Anschlußflanschen angesetzt sind. Die Flanschplatte 5 liegt bei dieser Ausführungsvariante nicht unmittelbar an der Batterie an. Dabei sind teilweise in Stichleitungen bzw. Verlängerungen 25 Ventile 17 eingebaut. Es ist aber auch möglich, andere verfahrenstechnische Geräte zwischenzuschalten.

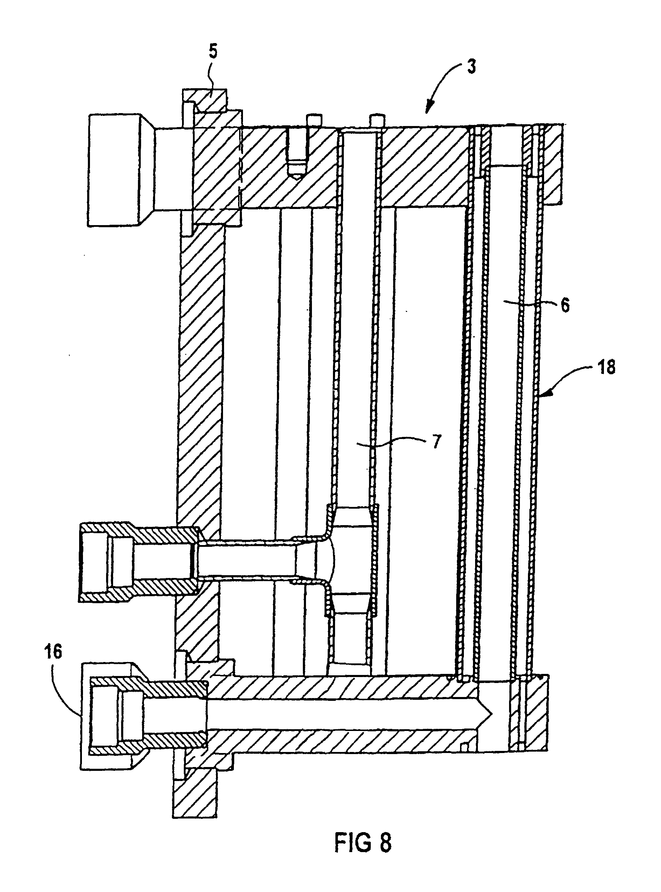

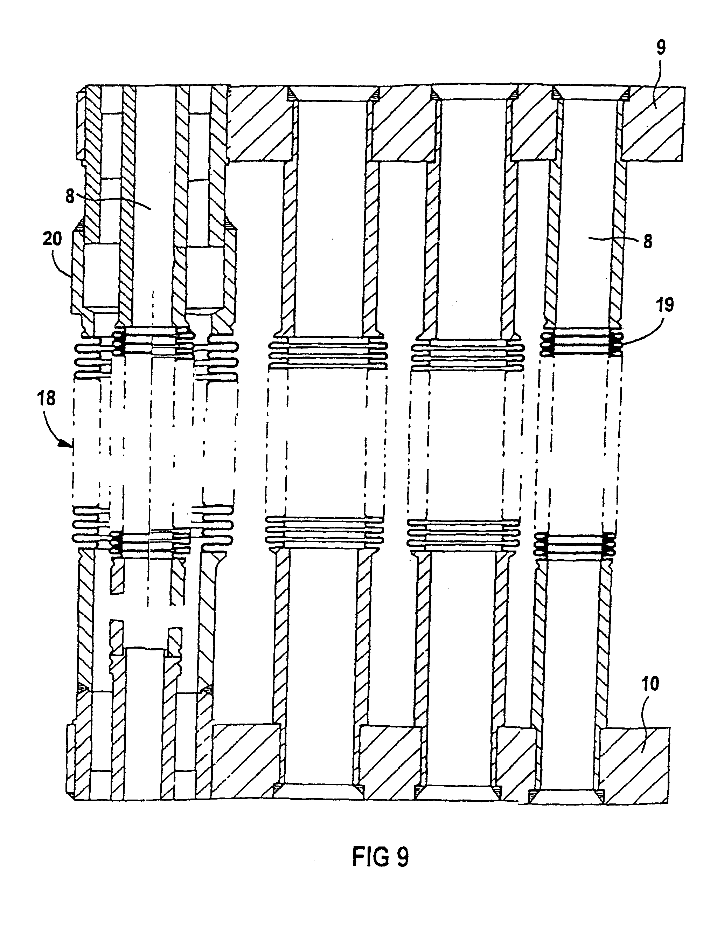

Insbesondere für Wasserstoff sind die Stichleitungen 61, die Sammelleitungen 60 und gegebenenfalls Verlängerungen 25 und/oder Verbindungsleitungen 8 als koaxiale Doppelmantelrohre 18 ausgebildet (vergleiche Figuren 8 und 9). Da die Versorgung der Brennstoffzellen mit Wasserstoff besonderer Vorsichtsmaßnahmen bedarf, wird der Wasserstoff häufig in Doppelmantelrohren 18 geführt, bei denen der äußere Raum auf Leckagen überwacht wird. Diese koaxialen Doppelmantelrohre 18 lassen sich in das kompakte Versorgungssystem problemlos anschließen.

Diese koaxialen Doppelmantelrohre 18 bedürfen an ihren Enden jedoch besonderer Dichtungselemente 11, da mindestens die innere Dichtstelle zum Wasserstoff hin abgeschottet werden muß. In Figur 5 ist eine derartige, für koaxiale Doppelmantelrohre 18 ausgebildete Dichtung gezeigt. Diese Dichtung umfaßt zwei koaxial angeordnete Dichtringe 14 und 14', die mit Stegen 15 verbunden sind. Die Stege 15 wirken als Abstandhalter der beiden Dichtringe 14, 14' und gewährleisten so eine sichere innere Dichtstelle an der Verbindungsstelle.

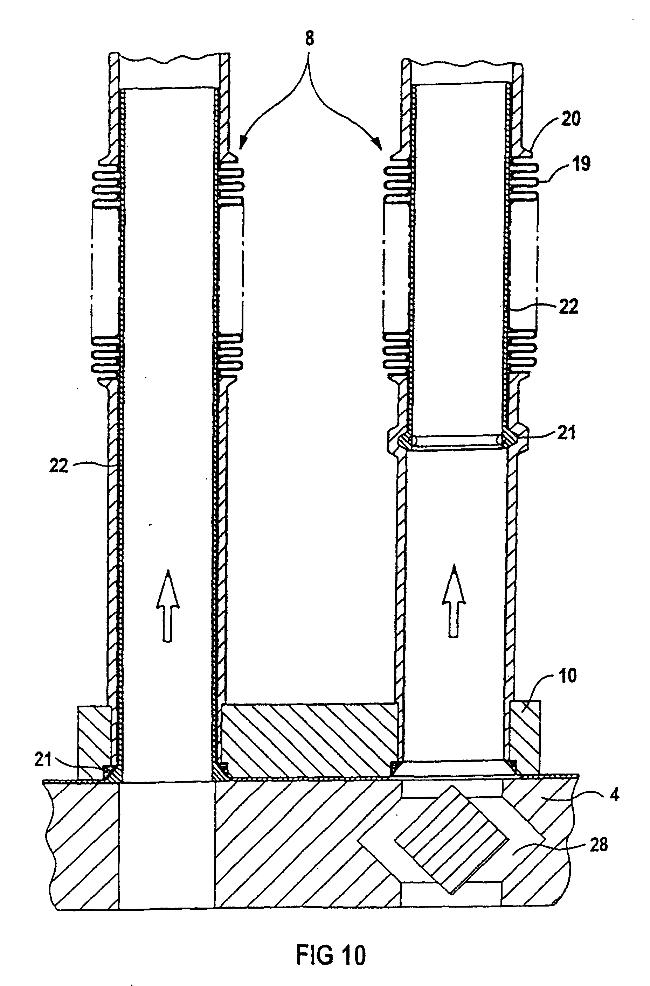

Figur 10 zeigt zwei Ausführungsbeispiele von Sammelleitungen, Verlängerungen und/oder Verbindungsleitungen, bei denen das Strömungsgeräusch besonders reduziert ist. In einer Ausführungsvariante ist eine rohrförmige Verbindungsleitung 8 zumindest teilweise, nämlich an den Wellen 19, Übergängen 20 und Rücksprüngen 21 mit flexiblem Werkstoffmaterial 22 ausgekleidet. Das flexible Werkstoffmaterial 22 ist dabei so ausgebildet, daß es die Beweglichkeit der flexiblen Verbindungsleitung 8 nicht wesentlich beeinträchtigt. Die Verbindungsleitungen 8 können insbesondere im Bereich eines Flansches auch vollständig mit flexiblem Werkstoffmaterial 23 ausgekleidet sein (linke Ausführungsvariante in Figur 10), wobei zusätzlich die Rücksprünge 20 an den Dichtstellen zwischen Verbindungsleitung 8 und Anschlußblock 3 überdeckt sind. Auf diese Art findet eine zuverlässige Geräuschreduzierung sowohl in der Verbindungsleitung 8 selbst als auch an den Verbindungsstellen zum Anschlußblock 3 statt, wobei das flexible Werkstoffmaterial 23 die Verbindungsleitung 8 in einer Weise auskleidet, daß ein völlig glatter Strömungsverlauf (vergleiche eingezeichnete Pfeile) möglich ist.

Das flexible Werkstoffmaterial ist beispielsweise ein Elastomer, das sich der Flexibilität der Verbindungsleitungen 8 anpaßt.

Es ist auch möglich, daß in den Stichleitungen 61 und/oder den Verbindungsleitungen 8, insbesondere in den Flanschplatten 41, 5 oder 9 oder ähnlichen Elementen, selbstsperrende Einrichtungen vorgesehen sind, die nur schematisch als Rückschlagventile 28 angedeutet sind (Figur 10). Diese selbstsperrende Einrichtungen dienen dazu, bei der Demontage den Medienweg zu sperren und auf diese Weise zum Beispiel einen Auslauf von Kühlwasser oder ein Freiwerden von Gas zu verhindern.

## Patentansprüche

1. Vorrichtung zum Zusammenschalten von einer ersten und mindestens einer zweiten Brennstoffzellen-Batterie (1), wobei jeder Batterie (1) ein Anschlußblock (3) zugeordnet ist, der eine zu einer Sammelleitung (60) führende Stichleitung (61) und einen Anschlußflansch (41, 44) am freien Ende der Stichleitung (61) aufweist, und wobei die Sammelleitung (60) jedes Blocks (3) einen ersten Kupplungsflansch (46, 42) an einem Ende aufweist,
**dadurch gekennzeichnet, dass** der erste Kupplungsflansch (46, 42) über eine flexible Verbindungsleitung (8) an einen zweiten Kupplungsflansch (47, 43) am anderen Ende der Sammelleitung (60) eines anderen Blocks (3) angekuppelt ist.

2. Vorrichtung nach Anspruch 1,
**gekennzeichnet durch** einen jeweils auf die Kapazität einer Batterie (1) ausgelegten Durchmesser der Stichleitung (61).

3. Vorrichtung nach Anspruch 2,
**gekennzeichnet durch** einen größeren Durchmesser der Sammelleitung (60), insbesondere einen auf die Kapazität der ganzen'Anlage abgestimmten Durchmesser.

4. Vorrichtung nach einem der Ansprüche 1 bis 3, **gekennzeichnet durch** in die Stichleitungen (61) geschaltete Ventile (17) und/oder Meßinstrumente und/oder andere verfahrenstechnische Einrichtungen zur Überwachung und/oder Steuerung der Batterie (1).

5. Vorrichtung nach einem der Ansprüche 1 bis 4,
**dadurch gekennzeichnet, daß** jeder Anschlußblock (3) für jedes Prozeßmedium der Batterien (1) eine eigene Sammelleitung (60) mit einer in die Sammelleitung mündenden Stichleitung (61, 62), einem Anschlußflansch (41, 44) am freien Ende der. Stichleitung (61, 62) und einem ersten Kupplungsflansch (42) an einem ersten Ende der Sammelleitung (60) aufweist.

6. Vorrichtung nach Anspruch 5,
**dadurch gekennzeichnet, daß** mehrerer Anschlußflansche (41) eines Blocks (3) zu einer Flanschplatte (44) zusammengefaßt sind.

7. Vorrichtung nach einem der Ansprüche 1 bis 6,
**dadurch gekennzeichnet, daß** mehrere Kopplungsflansche (43) eines Blocks zu einer Flanschplatte (47) zusammengefaßt sind.

8. Vorrichtung nach einem der Ansprüche 1 bis 7,
**dadurch gekennzeichnet, daß** die flexible Verbindungsleitung (8) eine längenflexible und /oder zumindest teilweise wellenartig geformte Verbindungsleitung (8) ist.

9. Vorrichtung nach einem der Ansprüche 1 bis 8,
**gekennzeichnet durch** ein Dichtungselement (11), insbesondere eine Flachdichtung (12) oder eine in eine Nut (13') eingelegte O-Ring-Dichtung (13), in einem Flansch (4).

10. Vorrichtung nach einem der Ansprüche 1 bis 9,
**gekennzeichnet durch** eine Trägerplatte (23) aus Elastomer-Verbundwerkstoff, in die jeweils Dichtungselemente (11) mehrerer Kupplungsflansche (42, 43) oder Dichtungselemente (11) mehrerer Anschlußflansche (41) integriert sind.

11. Vorrichtung nach einem der Ansprüche 1 bis 10,
**dadurch gekennzeichnet, daß** mindestens eine Sammelleitung (60) und/oder eine Stichleitung (61) als Doppelmantelrohr (18) ausgebildet ist, insbesondere als Doppelmantelrohr (18) zur Zuführung eines Prozeßmediums zur Einheit.

12. Vorrichtung nach Anspruch 11,
**dadurch gekennzeichnet, daß** der Anschlußflansch (4) am Ende der als Doppelmantelrohr (18) ausgebildeten Stichleitung (61) bzw. der Kopplungsflansch (4) am Ende der als Doppelmantelrohr (18) ausgebildeten Sammelleitung (60) zwei koaxial angeordnete, mit Stegen (15) verbundene Dichtungsringe (14, 14') trägt.

13. Vorrichtung nach Anspruch 1 bis 12,
**dadurch gekennzeichnet, daß** die Verbindungsleitung (8) zumindest teilweise mit einem flexiblen Werkstoff (22), insbesondere einem Elastomer, ausgekleidet ist.

14. Vorrichtung nach einem der Ansprüche 1 bis 13,
**gekennzeichnet durch** eine selbstsperrende Einrichtung (28) mindestens in einer Sammelleitung (60) und/oder in mindestens einer Stichleitung (61) und/oder in mindestens einem Verbindungselement (8).

15. Vorrichtung nach einem der Ansprüche 1 bis 14,
**gekennzeichnet durch** eine selbstsperrende Einrichtung (28) in einem Anschlußflansch (41) oder einem Kopplungsflansch (42).

16. Anlage mit einer ersten und mindestens einer zweiten Brennstoffzellen-Batterie (1), wobei an jede Batterie (1) ein Anschlußblock (3) mit mindestens einer Sammelleitung (60), einer jeweils von der Sammelleitung (60) zur Batterie (1) führenden Stichleitung (61) und jeweils einem ersten Kupplungsflansch (42) an einem Ende der Sammelleitung (60) angeschlossen ist und die Sammelleitung (60) jedes Blocks (3) über den ersten Kupplungsflansch (42) über eine flexible Verbindungsleitung (8) an einen zweiten Kupplungsflansch (43) am anderen Ende der Sammelleitung (60) einer anderen Batterie der Anlage angekoppelt ist.

17. Anlage nach Anspruch 16,
**gekennzeichnet durch** einen jeweils auf die Kapazität einer Batterie (1) ausgelegten Durchmesser der Stichleitung (61).

18. Anlage nach Anspruch 17,
**gekennzeichnet durch** einen größeren Durchmesser, insbesondere einen auf der Kapazität der ganzen Anlage abgestimmten Durchmesser, der Sammelleitung (60).

19. Anlage nach einem der Ansprüche 16 bis 18,
**gekennzeichnet durch** in die Stichleitungen geschaltete Ventile (17) und/oder Meßinstrumente und/oder andere verfahrenstechnische Einrichtungen.

20. Anlage nach einem der Ansprüche 16 bis 19,
**dadurch gekennzeichnet, daß** mehrere oder alle Batterien jeweils eine Stirnfläche aufweisen, in der alle Anschlüsse für die Prozeßmedien der Batterie angeordnet sind, und daß der Anschlußblock (3) einer Batterie (1) in die Stirnfläche (30) der Batterie (1) integriert ist.

21. Anlage nach einem der Ansprüche 16 bis 19,
**dadurch gekennzeichnet, daß** das Ende jeder Stichleitung (61) eines Blocks (3) über einen Anschlußflansch (41) an einen Anschluß der entsprechenden Batterie (1) angeschlossen ist.

22. Anlage nach Anspruch 20,
**gekennzeichnet durch** eine Flanschplatte (4), in die die Anschlußflansche mehrere Stichleitungen eines Blocks integriert sind.

23. Anlage nach einem der Ansprüche 16 bis 22,
**gekennzeichnet durch** eine Flanschplatte (4), in die die Kopplungsflansche mehrerer Sammelleitungen eines Blocks integriert sind.

24. Anlage nach einem der Ansprüche 16 bis 23,
**gekennzeichnet durch** jeweils eine eigene Sammelleitung (60) mit einer eigenen Stichleitung (61) für jedes Medium der Brennstoffzellen, wobei alle Stichleitungen (61) zu jeweils in die gleiche Richtung weisende Stirnflächen (30) der Batterien (1) führen und diese Stirnflächen alle Anschlüsse für die Prozeßmedien der Batterien tragen.

25. Anlage nach einem der Ansprüche 16 bis 23,
**dadurch gekennzeichnet, daß** in jedem Block mindestens eine weitere Sammelleitung (61) mit mindestens einem ersten Kupplungsflansch (42) an einem Ende und einer Stichleitung (61) vorgesehen ist, wobei die Stichleitung (61) dieser weiteren Sammelleitung (60) über eine Steckverbindung (16) an die entsprechende Batterie (1) angeschlossen ist.

26. Anlage nach einem der Ansprüche 16 bis 25,
**dadurch gekennzeichnet, daß** die Kupplungsflansche (42, 43) der Blöcke (3) über flexible Verbindungsleitungen (8) mit entsprechenden eigenen Kupplungsflanschen (9, 10) miteinander verkuppelt sind.

27. Anlage nach Anspruch 26,
**dadurch gekennzeichnet, daß** die Verbindungsleitungen (8) längenflexibel sind, insbesondere zumindest teilweise wellenartig geformt.

28. Anlage nach einem der Ansprüche 16 bis 27,
**dadurch gekennzeichnet, daß** mindestens an einem Flansch (4) ein Dichtungselement (11), insbesondere eine Flachdichtung (12) oder eine in eine Nut (13') eingelegte O-Ring-Dichtung (13), vorgesehen ist.

29. Anlage nach einem der Ansprüche 16 bis 28,
**gekennzeichnet durch** eine Trägerplatte (23) aus Elastomer-Verbundwerkstoff, in die Dichtungselemente (4) mehrerer Kupplungsflansche oder mehrerer Anschlußflansche integriert sind.

30. Anlage nach einem der Ansprüche 16 bis 29,
**dadurch gekennzeichnet, daß** mindestens eine Sammelleitung (60) und/oder eine Stichleitung (61) als koaxiales Doppelmantelrohr (18) ausgebildet ist, insbesondere zur Zuführung eines Betriebsmittels zu einer Einheit.

31. Anlage nach einem der Ansprüche 16 bis 30,
**dadurch gekennzeichnet, daß** der Anschlußflansch (4) am Ende der als Doppelmantelrohr (18) ausgebildeten Stichleitung (61) bzw. der Kupplungsflansch (4) am Ende der als Doppelmantelrohr (18) ausgebildeten Sammelleitung (60) zwei koaxial angeordnete, mit Stegen verbundene Dichtungsringe (14, 14') trägt.

32. Anlage nach einem der Ansprüche 16 bis 31,
**gekennzeichnet durch** selbstsperrende Einrichtungen (28) in den Sammelleitungen (60) und/oder in den Stichleitungen (61) und/oder in Verbindungsleitungen, die die Sammelleitungen (60) benachbarter Blöcke verbinden.

33. Anlage nach einem der Ansprüche 16 bis 31,
**gekennzeichnet durch** eine selbstsperrende Einrichtung (28) in einem Anschlußflansch oder einem Kupplungsflansch.

## Claims

1. Device for the interconnection of a first and at least one second fuel cell battery (1), each battery (1) being assigned a junction block (3) which has a stub line (61) leading to a collecting line (60) and a junction flange (41, 44) at the free end of the stub line (61), and the collecting line (60) of each block (3) having a first coupling flange (46, 42) at one end, **characterized in that** the first coupling flange (46, 42) is coupled via a flexible connecting line (8) to a second coupling flange (47, 43) at the other end of the collecting line (60) of another block (3).

2. Device according to Claim 1, **characterized by** a diameter of the stub line (61) which is designed in each case in terms of the capacity of a battery (1).

3. Device according to Claim 2, **characterized by** a larger diameter of the collecting line (60), in particular a diameter coordinated with the capacity of the entire plant.

4. Device according to one of Claims 1 to 3, **characterized by**, inserted into the stub lines (61), valves (17) and/or measuring instruments and/or other processing engineering equipment for monitoring and/or controlling the battery (1).

5. Device according to one of Claims 1 to 4, **characterized in that** each junction block (3) has, for each process medium of the batteries (1), a specific collecting line (60) with a stub line (61, 62) issuing into the collecting line, a junction flange (41, 44) at the free end of the stub line (61, 62) and a first coupling flange (42) at a first end of the collecting line (60).

6. Device according to Claim 5, **characterized in that** a plurality of junction flanges (41) of a block (3) are combined into a flange plate (44).

7. Device according to one of Claims 1 to 6, **characterized in that** a plurality of coupling flanges (43) of a block are combined into a flange plate (47).

8. Device according to one of Claims 1 to 7, **characterized in that** the flexible connecting line (8) is a connecting line (8) of flexible length and/or of at least partially wave-like shape.

9. Device according to one of Claims 1 to 8, **characterized by** a sealing element (11), in particular a flat seal (12) or an O-ring seal (13) inserted into a groove (13'), in a flange (4).

10. Device according to one of Claims 1 to 9, **characterized by** a carrier plate (23) which consists of composite elastomeric material and into which sealing elements (11) of a plurality of coupling flanges (42, 43) or sealing elements (11) of a plurality of junction flanges (41) are integrated in each case.

11. Device according to one of Claims 1 to 10, **characterized in that** at least one collecting line (60) and/or one stub line (61) is designed as a double-casing tube (18), in particular as a double-casing tube (18) for supplying a process medium to the unit.

12. Device according to Claim 11, **characterized in that** the junction flange (4), at the end of the stub line (61) designed as a double-casing tube (18), or the coupling flange (4), at the end of the collecting line (60) designed as a double-casing tube (18), carries two coaxially arranged sealing rings (14, 14') connected to webs (15).

13. Device according to Claims 1 to 12, **characterized in that** the connecting line (8) is lined at least partially with a flexible material (22), in particular an elastomer.

14. Device according to one of Claims 1 to 13, **characterized by** self-closing equipment (28) at least in one collecting line (60) and/or in at least one stub line (61) and/or in at least one connecting element (8).

15. Device according to one of Claims 1 to 14, **characterized by** self-closing equipment (28) in a junction flange (41) or a coupling flange (42).

16. Plant with a first and at least one second cell battery (1), each battery (1) having connected to it a junction block (3) with at least one collecting line (60), with a stub line (61) leading in each case from the collecting line (60) to the battery (1) and in each case with a first coupling flange (42) at one end of the collecting line (60), and the collecting line (60) of each block (3) being coupled via the first coupling flange (42), via a flexible connecting line (8), to a second coupling flange (43) at the other end of the collecting line (60) of another battery of the plant.

17. Plant according to Claim 16, **characterized by** a diameter of the stub line (61) which is designed in each case in terms of the capacity of a battery (1).

18. Plant according to Claim 17, **characterized by** a larger diameter, in particular a diameter coordinated with the capacity of the entire plant, of the collecting line (60).

19. Plant according to one of Claims 16 to 18, **characterized by**, inserted into the stub lines, valves (17) and/or measuring instruments and/or other process engineering equipment.

20. Plant according to one of Claims 16 to 19, **characterized in that** a plurality of or all the batteries have in each case an end face, in which all the junctions for the process media of the battery are arranged, and **in that** the junction block (3) of a battery (1) is integrated into the end face (30) of the battery (1).

21. Plant according to one of Claims 16 to 19, **characterized in that** the end of each stub line (61) of a block (3) is connected to a junction of the corresponding battery (1) via a junction flange (41).

22. Plant according to Claim 20, **characterized by** a flange plate (4), into which the junction flanges of a plurality of stub lines of a block are integrated.

23. Plant according to one of Claims 16 to 22, **characterized by** a flange plate (4), into which the coupling flanges of a plurality of collecting lines of a block are integrated.

24. Plant according to one of Claims 16 to 23, **characterized by**, in each case, a specific collecting line (60) with a specific stub line (61) for each medium of the fuel cells, all the stub lines (61) leading to end faces (30) of the batteries (1), said end faces in each case pointing in the same direction, and these end faces carrying all the junctions for the process media of the batteries.

25. Plant according to one of Claims 16 to 23, **characterized in that** at least one further collecting line (61) with at least one first coupling flange (42) at one end and with a stub line (61) is provided in each block, the stub line (61) of this further collecting line (60) being connected to the corresponding battery (1) via a plug connection (16).

26. Plant according to one of Claims 16 to 25, **characterized in that** the coupling flanges (42, 43) of the blocks (3) are coupled to one another via flexible connecting lines (8) having corresponding specific coupling flanges (9, 10).

27. Plant according to Claim 26, **characterized in that** the connecting lines (8) are of flexible length, in particular of at least partially wave-like shape.

28. Plant according to one of Claims 16 to 27, **characterized in that** a sealing element (11), in particular a flat seal (12) or an O-ring seal (13) inserted into a groove (13'), is provided at least at one flange (4).

29. Plant according to one of Claims 16 to 28, **characterized by** a carrier plate (23) which consists of composite elastomeric material and into which sealing elements (4) of a plurality of coupling flanges or of a plurality of junction flanges are integrated.

30. Plant according to one of Claims 16 to 29, **characterized in that** at least one collecting line (60) and/or one stub line (61) is designed as a coaxial double-casing tube (18), in particular for supplying a fuel to a unit.

31. Plant according to one of Claims 16 to 30, **characterized in that** the junction flange (4), at the end of the stub line (61) designed as a double-casing tube (18), or the coupling flange (4), at the end of the collecting line (60) designed as a double-casing tube (18), carries two coaxially arranged sealing rings (14, 14') connected to webs.

32. Plant according to one of Claims 16 to 31, **characterized by** self-closing equipment (28) in the collecting lines (60) and/or in the stub lines (61) and/or in the connecting lines which connect the collecting lines (60) of adjacent blocks.

33. Plant according to one of Claims 16 to 31, **characterized by** self-closing equipment (28) in a junction flange or a coupling flange.

## Revendications

1. Dispositif pour relier ensemble une première et au moins une deuxième batterie (1) de piles à combustible, à chaque batterie (1) étant associé un bloc (3) de raccord qui a un ajutage (61) menant à un conduit (60) collecteur et une bride (41, 44) de raccord à l'extrémité libre de l'ajutage (61), et le conduit (60) collecteur de chaque bloc (3) a une première bride (46, 42) de couplage à une extrémité,
**caractérisé en ce que** la première bride (46, 42) de couplage est couplée par un conduit (8) souple de liaison à une deuxième bride (47, 43) de couplage à l'autre extrémité du conduit (60) collecteur d'un autre bloc (3).

2. Dispositif suivant la revendication 1,
**caractérisé par** un diamètre de l'ajutage (61) adapté respectivement à la capacité d'une batterie (1).

3. Dispositif suivant la revendication 2,
**caractérisé par** un diamètre plus grand du conduit (60) collecteur, notamment par un diamètre adapté à la capacité de toute l'installation.

4. Dispositif suivant l'une des revendications 1 à 3,
**caractérisé par** des vannes (17) et/ou des instruments de mesure et/ou d'autres dispositifs de techniques de procédés de surveillance et/ou de commande de la batterie (1) qui sont montés dans les ajutages (61).

5. Dispositif suivant l'une des revendications 1 à 4,
**caractérisé en ce que** chaque bloc (3) de raccord a pour chaque fluide du procédé des batteries (1) son propre conduit (60) collecteur ayant un ajutage (61, 62) débouchant dans le conduit collecteur, une bride (41, 44) de raccord à l'extrémité libre de l'ajutage (61, 62) et une première bride (42) de couplage à une première extrémité du conduit (60) collecteur.

6. Dispositif suivant la revendication 5,
**caractérisé en ce que** plusieurs brides (41) de raccord d'un bloc (3) sont rassemblées en une plaque (44) de bride.

7. Dispositif suivant l'une des revendications 1 à 6,
**caractérisé en ce que** plusieurs brides (43) de couplage d'un bloc sont rassemblées en une plaque (47) de bride.

8. Dispositif suivant l'une des revendications 1 à 7,
**caractérisé en ce que** le conduit (8) souple de liaison est un conduit (8) de liaison souple en longueur et/ou conformé au moins en partie de manière ondulée.

9. Dispositif suivant l'une des revendications 1 à 8,
**caractérisé par** un élément (11) d'étanchéité, notamment par une garniture (12) d'étanchéité plate ou par un joint (13) torique inséré dans une gorge (13') dans une bride (4).

10. Dispositif suivant l'une des revendications 1 à 9,
**caractérisé par** une plaque (23) support en matériau composite élastomère, dans laquelle sont intégrés respectivement des éléments (11) d'étanchéité de plusieurs brides (42, 43) de couplage ou des éléments (11) d'étanchéité de plusieurs brides (41) de raccord.

11. Dispositif suivant l'une des revendications 1 à 10,
**caractérisé en ce qu'**au moins un conduit (60) collecteur et/ou un ajutage (61) est constitué en tuyau (12) à double enveloppe, notamment en tuyau (12) à double enveloppe pour l'apport d'un fluide de procédé à l'unité.

12. Dispositif suivant la revendication 11,
**caractérisé en ce que** la bride (4) de raccord porte, à l'extrémité de l'ajutage (61) formé en tant que tuyau (18) à double enveloppe ou la bride (4) de couplage à l'extrémité du conduit (60) collecteur constitué en tuyau (18) à double enveloppe, deux anneaux (14, 14') d'étanchéité disposés coaxialement et reliés par des entretoises (15).

13. Dispositif suivant la revendication 1 à 12,
**caractérisé en ce que** le conduit (8) de liaison est habillé au moins en partie d'un matériau (22) souple, notamment d'un élastomère.

14. Dispositif suivant l'une des revendications 1 à 13,
**caractérisé par** un dispositif (28) à auto-obturation au moins dans un conduit (60) collecteur et/ou dans au moins un ajutage (61) et/ou dans au moins un élément (8) de liaison.

15. Dispositif suivant l'une des revendications 1 à 14,
**caractérisé par** un dispositif (28) à auto-obturation dans une bride (41) de raccord ou dans une bride (42) de couplage.

16. Installation comprenant une première et au moins une deuxième batterie (1) de pile à combustible, dans laquelle à chaque batterie (1) est raccordé un bloc (3) de raccord ayant au moins un conduit (60) collecteur, un ajutage (61) menant respectivement du conduit (60) collecteur à la batterie (1) et respectivement une première bride (42) de couplage à une extrémité du conduit (60) collecteur, et le conduit (60) collecteur de chaque bloc (3) est couplé par la première bride (42) de couplage, par l'intermédiaire d'un conduit (8) souple de liaison, à une deuxième bride (43) de couplage à l'autre extrémité du conduit (60) collecteur d'une autre batterie de l'installation.

17. Installation suivant la revendication 16,
**caractérisée par** un diamètre de l'ajutage (61) adapté respectivement à la capacité d'une batterie (1).

18. Installation suivant la revendication 17,
**caractérisée par** un diamètre plus grand, notamment par un diamètre adapté à la capacité de toute l'installation, du conduit (60) collecteur.

19. Installation suivant l'une des revendications 16 à 18,
**caractérisée par** des vannes (17) et/ou par des instruments de mesure et/ou par d'autres dispositifs de techniques de procédés montés dans les ajutages.

20. Installation suivant l'une des revendications 16 à 19,
**caractérisée en ce que** plusieurs batteries ou toutes les batteries ont respectivement une face frontale dans laquelle tous les raccords pour les fluides du procédé de la batterie sont placés et **en ce que** le bloc (3) de raccord d'une batterie (1) est intégré à la face (30) frontale de la batterie (1).

21. Installation suivant l'une des revendications 16 à 19,
**caractérisée en ce que** l'extrémité de chaque ajutage (61) d'un bloc (3) est raccordée par l'intermédiaire d'une bride (41) de raccord à un raccord de la batterie (1) correspondante.

22. Installation suivant la revendication 20,
**caractérisée par** une plaque (4) de bride dans laquelle les brides de raccord de plusieurs ajutages d'un bloc sont intégrées.

23. Installation suivant l'une des revendications 16 à 22,
**caractérisée par** une plaque (4) de bride dans laquelle les brides de couplage de plusieurs conduits collecteurs d'un bloc sont intégrées.

24. Installation suivant l'une des revendications 16 à 23,
**caractérisée par** respectivement un propre conduit (60) collecteur ayant son propre ajutage (61) pour chaque fluide des piles à combustible, tous les ajutages (61) menant aux faces (30) frontales tournées respectivement dans la même direction des batteries (1) et ces faces frontales portant tous les raccords pour les fluides de procédés des batteries.

25. Installation suivant l'une des revendications 16 à 23,
**caractérisée en ce qu'**il est prévu dans chaque bloc au moins un autre conduit (61) collecteur ayant au moins une première bride (42) de couplage à une extrémité et un ajutage (61), l'ajutage (61) de cet autre conduit (60) collecteur étant raccordé à la batterie (1) correspondante par une liaison (16) à enfichage.

26. Installation suivant l'une des revendications 16 à 25,
**caractérisée en ce que** les brides (42, 43) de couplage des blocs (3) sont couplées entre elles par des conduits (8) souples de liaison ayant des brides (9, 10) de couplage propres correspondantes.

27. Installation suivant la revendication 26,
**caractérisée en ce que** les conduits (8) de liaison sont souples en longueur, en étant conformés notamment au moins en partie de façon ondulée.

28. Installation suivant l'une des revendications 16 à 27,
**caractérisée en ce qu'**il est prévu au moins sur une bride (4) un élément (11) d'étanchéité, notamment une garniture (12) d'étanchéité plate ou un joint (13) torique inséré dans une gorge (13').

29. Installation suivant l'une des revendications 16 à 28,
**caractérisée par** une plaque support (23) en matériau composite élastomère dans laquelle des éléments (4) d'étanchéité de plusieurs brides de couplage ou de plusieurs brides de raccord sont intégrés.

30. Installation suivant l'une des revendications 16 à 29,
**caractérisée en ce qu'**au moins un conduit (60) collecteur et/ou un ajutage (61) est constitué en tuyau (18) coaxial à double enveloppe, notamment pour l'apport d'un fluide de fonctionnement à une unité.

31. Installation suivant l'une des revendications 16 à 30,
**caractérisée en ce que** la bride (4) de raccord, à l'extrémité de l'ajutage (61) constitué en tuyau (18) à double enveloppe ou la bride (4) de couplage à l'extrémité du conduit (60) collecteur constitué en tuyau (18) à double enveloppe, porte deux anneaux (14, 14') d'étanchéité disposés coaxialement et reliés par des entretoises.

32. Installation suivant l'une des revendications 16 à 31,
**caractérisée par** des dispositifs (28) à obturation automatique dans les conduits (60) collecteurs et/ou dans les ajutages (61) et/ou dans les conduits de liaison qui mettent les conduits (60) collecteurs de blocs voisins en communication.

33. Installation suivant l'une des revendications 16 à 31,
**caractérisée par** un dispositif (28) à obturation automatique dans une bride de raccord ou dans une bride de couplage.
